# EUROPÄISCHE PATENTANMELDUNG

(11) **EP 3 428 901 A1**
(43) Veröffentlichungstag der Anmeldung: **16.01.2019**
(21) Anmeldenummer: 17181447.8
(22) Anmeldetag: 14.07.2017
(51) Int. Cl.: G08G 1/16, B60Q 1/50

(54) **VERFAHREN ZUR ERZEUGUNG UND WIEDERGABE VON INFORMATIONEN MITTELS EINER FAHRZEUGLEUCHTE EINES FAHRZEUGS INSBESONDERE IN DESSEN PARKRAUM**

(71) Anmelder: odelo GmbH, 70329 Stuttgart (DE)
(72) Erfinder: VOLLMER, Marco, 71332 Waiblingen (DE)
(74) Vertreter: Benninger, Johannes

(57) **Zusammenfassung**

Es wird ein Verfahren zur Erzeugung und Wiedergabe von Informationen (01) zumindest mittels in einer Fahrzeugleuchte (02) eines abgestellten, eigenen Fahrzeugs (03) beherbergter Projektionsmittel beschrieben. Das Verfahren umfasst die Verfahrensschritte:
- Erfassung von das Vorhandensein und den Verlauf von Fuß- und Verkehrswegen sowie Bewegungen anderer Fahrzeuge und von Personen umfassender Verkehrsinformationen im Umkreis des eigenen Fahrzeugs (03) mittels fahrzeugeigener Erfassungsmittel und/oder fahrzeugeigener Informationsquellen,
- Auswertung der Verkehrsinformation unter Erkennung einer potentiellen Gefährdung einer Person in unmittelbarer Nähe des eigenen Fahrzeugs (03),
- Erzeugung einer auf die Gefährdung hinweisenden Darstellung (06, 61, 62, 63, 64, 65, 66), und
- Warnung wenigstens der potentiell gefährdeten Person durch Ausgabe einer zumindest die auf die Gefährdung hinweisende Darstellung (06, 61, 62, 63, 64, 65, 66) umfassenden Information (01) durch Projektion mindestens eines die Darstellung (06, 61, 62, 63, 64, 65, 66) wiedergebenden Bilds (05) mittels mindestens einem in wenigstens einer Fahrzeugleuchte (02) des eigenen Fahrzeugs (03) beherbergter Projektionsmittel auf eine Fläche (04, 41, 42) in der Nähe des eigenen Fahrzeugs (03).

## Beschreibung

Die Erfindung betrifft ein Verfahren zur Erzeugung und Wiedergabe von Informationen gemäß dem Oberbegriff des Anspruchs 1.

Insbesondere beschäftigt sich die Erfindung mit einer Erzeugung und Wiedergabe von Informationen mittels einer Fahrzeugleuchte eines Fahrzeugs unter Schaffung von Informationsanzeigen im öffentlichen Raum, insbesondere im Parkraum von Fahrzeugen, einhergehend mit einer Steigerung der Verkehrssicherheit sowie der Erzeugung von Informationsanzeigen ohne die Notwendigkeit lokaler Infrastruktur.

Bekannt ist, Informationen zur Steigerung der Verkehrssicherheit durch statische Anzeigen und Darstellungen sowie eine dynamische Erzeugung von Licht- und/oder Tonsignalen im Verkehrsraum wiederzugeben. Beispiele für statische Anzeigen und Darstellungen sind hierbei Verkehrsschilder, Fahrzeugbeschriftungen, Warndreieck. Beispiele für die dynamische Erzeugung von Tonsignalen sind Hupen, Sirenen, Alarmanlagen. Beispiele für die dynamische Erzeugung von Lichtsignalen sind die verschiedenen Lichtfunktionen, die durch Lichtsignalanlagen und an einem im Straßenverkehr teilnehmenden Fahrzeug zwingend vorgeschriebene Fahrzeugleuchten erfüllt werden, um im Falle der Fahrzeuge momentane Fahrzustände, beabsichtigte Handlungen anzuzeigen, die Fahrbahn auszuleuchten sowie Fahrern und anderen Verkehrsteilnehmern die Erkennung der Anwesenheit oder des Näherkommens sowie der Fahrtrichtung eines Fahrzeugs bei Dunkelheit zu erleichtern.

Ein dabei unzufriedenstellend gelöstes Problem ist, die Verkehrssicherheit in verschiedenen Situationen zu erhöhen.

Darüber hinaus bekannt ist, Informationen, wie etwa Werbung, statisch beispielsweise mittels Litfaßsäulen, Plakaten, oder dynamisch beispielsweise mittels Großbildschirmen, Projektoren im öffentlichen Raum sichtbar verfügbar zu machen. Zusätzliche Möglichkeiten zur akustischen Wahrnehmung ergeben sich durch Durchsagen, etwa mittels Rundfunk, Beschallungseinrichtungen.

Hierbei wird grundsätzlich zwischen zwei Arten von Informationen unterschieden, zum Einen der so genannten Above-the-Line Information (ATLI) und zum Anderen der so genannten Below-the-Line Information (BTLI).

ATLI umfasst beispielsweise Werbung in klassischen Medien, die konventionell und eher unpersönlich an eine große Masse gesendet wird. Werbeaktivitäten werden dabei vom Publikum direkt als solche wahrgenommen.

Die typischen ATL-Instrumente sind ohne Anspruch auf Vollständigkeit beispielsweise:
- Printwerbung,
- Radiowerbung,
- Außenwerbung,
- Onlinewerbung,
- TV-Werbung,
- Kino-Werbung.

BTLI ergänzen das Segment der ATLI. Sie werden nicht vermittels der klassischen Medien verbreitet. Beispielsweise Werbeaktivitäten werden von der Zielgruppe oftmals nicht oder zumindest nicht direkt als Werbung erkannt.

Folgende Instrumente sind - ebenfalls ohne Anspruch auf Vollständigkeit - typisch für BTL:
- Verkaufsförderung,
- Öffentlichkeitsarbeit (PR),
- Direktmarketing,
- Messen und Ausstellungen,
- Sponsoring, Eventmarketing und Product Placement,
- Innovative Werbeformen, beispielsweise als Guerilla-Marketing bezeichnet.

Informationsanzeigen benötigen bislang eine lokale, zumindest zeitweilig stationär angeordnete Infrastruktur, wie beispielsweise Videoprojektoren oder ähnliches, um beispielsweise in einem Fußgängerbereich Informationen auf dem Boden anzuzeigen.

Vielerorts ist im Parkraum von Fahrzeugen die Installation solcher lokaler Infrastruktur mit einem erheblichen Aufwand verbunden.

Darüber hinaus tragen die bekannten Informationsanzeigen keiner Erhöhung der Verkehrssicherheit bei.

Durch DE 10 2004 025 251 A1 ist eine Warnvorrichtung für Kraftfahrzeuge mit einem eine Diode aufweisenden Laserlichtstrahler oder Laserprojektor bekannt, wobei die Diode einen gebündelten Lichtstrahl aussendet, der auf einer bestimmten reflektierenden Fläche auf der Heckscheibe eine Signalinformation erzeugt, die für den Fahrer eines nachfolgenden Fahrzeugs auf der reflektierenden Fläche der Heckscheibe oder außerhalb der Heckscheibe des Kraftfahrzeugs als Warndreieck in Erscheinung tritt. Als Beispiel für das Inerscheinungtreten außerhalb des Kraftfahrzeugs wird die Projektion eines Warndreiecks auf Nebel oder Rauch angegeben.

Eine solche Warnvorrichtung ist jedoch nicht geeignet, sämtliche sich nähernden Verkehrsteilnehmer ausreichend zu warnen.

Durch DE 10 2006 050 548 A1 ist ein Verfahren zur Warnung anderer Verkehrsteilnehmer bekannt. In diesem wird mithilfe eines Projektionsmittels ein Warnhinweis an eine Projektionsstelle außerhalb des liegengebliebenen eigenen Kraftfahrzeugs projiziert, an welcher es eine besonders hohe Warnwirkung für andere Verkehrsteilnehmer entfalten kann. Hierzu werden Umgebungsinformationen gesammelt, anhand denen die Position des eigenen Kraftfahrzeugs relativ zu einem Verkehrsweg und die Positionen sowie Geschwindigkeiten der Kraftfahrzeuge anderer Verkehrsteilnehmer relativ zum eigenen Kraftfahrzeug. Die Projektionsstelle kann abhängig von der Bewegung der Kraftfahrzeuge anderer Verkehrsteilnehmer relativ zum eigenen Kraftfahrzeug angepasst werden, um so auch für sich schnell fortbewegende Kraftfahrzeuge anderer Verkehrsteilnehmer gut erkennbar zu sein. Der Warnhinweis kann eine Darstellung benötigter Hilfe für das eigene, liegengebliebene oder verunfallte Fahrzeug und dessen Insassen umfassen.

Nachteilig hieran ist die Beschränkung einer Warnung sich nähernder Verkehrsteilnehmer bezüglich des eigenen Kraftfahrzeugs.

Durch DE 10 2012 223 410 A1 ist ein Verfahren bekannt, welches die Hilfe von Passanten oder anderen Verkehrsteilnehmern in Bezug auf Fahrzeuge ermöglicht, bei denen außergewöhnliche Ereignisse eingetreten sind, insbesondere Diebstahl. Um die Hilfe von Passanten zum Wiederauffinden solcher Fahrzeuge zu Hilfe zu ziehen, werden auf die Ereignisse hinweisende Informationen oder zu solchen Informationen weiterführende Codes, wie etwa Barcodes, Data Matrix Codes, in die unmittelbare Umgebung eines betroffenen eigenen Fahrzeugs projiziert.

Nachteilig hieran ist wiederum die Beschränkung auf Hinweise bezüglich des eigenen Fahrzeugs.

Dem Stand der Technik gemein ist, dass sich nähernde Verkehrsteilnehmer nur bezüglich des eigenen Fahrzeugs gewarnt werden.

Eine Aufgabe der Erfindung ist ein Verfahren zur Erzeugung und Wiedergabe von Informationen bereitzustellen, welches eine nachhaltige Erhöhung der Verkehrssicherheit mit sich bringt und darüber hinaus die Wiedergabe von Informationen ohne einen Bedarf an lokaler Infrastruktur ermöglicht.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach ein Verfahren zur Erzeugung und Wiedergabe von Informationen zumindest mittels in einer Fahrzeugleuchte eines abgestellten, eigenen Fahrzeugs beherbergter Projektionsmittel, welches vorsieht, mittels fahrzeugeigener Erfassungsmittel und/oder fahrzeugeigener Informationsquellen, wie etwa satellitengestützter Standortbestimmung und Kartendaten, des eigenen Fahrzeugs das Vorhandensein und den Verlauf von Fuß- und Verkehrswegen sowie Bewegungen von Personen und anderer Fahrzeuge umfassende Verkehrsinformationen im Umkreis insbesondere der näheren Umgebung des eigenen Fahrzeugs zu erfassen, anhand einer Auswertung dieser Verkehrsinformationen eine potentielle Gefährdung einer Person in unmittelbarer Nähe des eigenen Fahrzeugs zu erkennen, eine auf die Gefährdung hinweisende Darstellung zu erzeugen und wenigstens die potentiell gefährdete Person durch Ausgabe einer zumindest die auf die Gefährdung hinweisende Darstellung umfassenden Information durch Projektion mindestens eines die Darstellung wiedergebenden Bilds mittels mindestens einem in wenigstens einer Fahrzeugleuchte des eigenen Fahrzeugs beherbergter Projektionsmittel auf eine Fläche in unmittelbarer Nähe des eigenen Fahrzeugs hiervor zu warnen.

Bei der Fläche kann es sich um eine Wand- oder Bodenfläche oder um eine Kombination aus Wand- und Bodenfläche handeln.

Grundsätzlich denkbar ist, dass die Darstellung an die Ausrichtung, Art und Orientierung der Fläche angepasst wird, beispielsweise um eine verzerrungsfreie Wiedergabe der Bildinformation zu erhalten.

Ebenfalls denkbar ist eine Anpassung der Darstellung an die Beschaffenheit und/oder Farbe der Fläche, beispielsweise um Farb- und/oder Helligkeitsunterschiede auf verschiedenen Partien einer Fläche auszugleichen und/oder um eine zur einwandfreien Wahrnehmung durch die potentiell gefährdete Person hinreichende Helligkeit sicherzustellen.

Die Darstellung kann eine Grafik, insbesondere eine Stopplinie umfassen, bei deren Übertretung der Parkraum des eigenen Fahrzeugs verlassen und ein Verkehrs-, insbesondere Fahrweg anderer Fahrzeuge beschritten wird.

Die Information kann eine Projektion eines Warnhinweises auf den Boden des Verkehrs-, insbesondere Fahrwegs vor einem herannahenden anderen Fahrzeug und/oder die Ausgabe eines Warn-, beispielsweise Lichtsignals an das herannahende andere Fahrzeug, insbesondere Kraftfahrzeug, Fahrrad, umfassen.

Die Darstellung kann einen Hinweis auf eine sichere Überquerungsmöglichkeit des Verkehrs-, insbesondere Fahrwegs anderer Fahrzeuge in der Nähe des eigenen Fahrzeugs umfassen.

Zusätzlich kann die Information ein Tonsignal als Warnsignal umfassen.

Die Information kann ein zumindest zeitweiliges Sprach- und/oder SOS-Tonsignal umfassen, wenn eine als potentiell gefährdet erkannte Person verunfallt ist, beispielsweise die Information ignoriert hat und von einem herannahenden anderen Fahrzeug erfasst wurde.

Das Sprach- und/oder SOS-Tonsignal kann bei einem im Umfeld erkannten Unfall zumindest zeitweilige ausgegeben werden und/oder wenn ein Sturz einer Person im Umkreis einschließlich der näheren Umgebung des Fahrzeugs erfassten worden ist.

Das Tonsignal kann ein Geräusch quietschender Reifen umfassen, wie es bei der Vollbremsung eines Fahrzeugs auftritt, um intensive Benutzer von Mobiltelefonen, insbesondere Smartphones, bezüglich deren Fehlverhalten und Selbstgefährdung im Straßenverkehr zu sensibilisieren.

Die Ausgabe von Tonsignalen kann durch im eigenen Fahrzeug ohnehin verbaute akustische Signalmittel erfolgen, beispielsweise Horn, Hupe, Sirene, Alarmanlage, Schließeinrichtung.

Alternativ oder zusätzlich kann die Ausgabe von Tonsignalen anhand hierzu in einer oder mehreren Fahrzeugleuchten, wie etwa Front- und/oder Heckleuchten, Seitenmarkierungsleuchten, Begrenzungsleuchten, separat, beispielsweise in den Außenrückblickspiegelgehäusen untergebrachte Wiederholblinkleuchten und/oder direkt vorzugsweise an der Unterseite der Außenrückblickspiegelgehäusen angeordneten Lautsprechern erfolgen.

Alternativ oder zusätzlich kann die Information die Weiterleitung einer Mitteilung an eine Notrufzentrale umfassen.

Die Information kann zumindest in der Zeit oder einem Teil der Zeit, in der zwar Personen im Umkreis einschließlich der näheren Umgebung des eigenen Fahrzeugs erfasst werden, diese jedoch keiner potentiellen Gefährdung ausgesetzt sind, Werbung in Bild und/oder Ton umfassen.

Es ist ersichtlich, dass die Erfindung die Aufgabe durch eine fahrzeugeigene Projektion von Informationen auf eine Fläche in dessen Umgebung, insbesondere auf den dieses umgebenden Boden löst.

Hierbei kann auf fahrzeugspezifische Informationsquellen zurückgegriffen werden, insbesondere Navigationsinformationen sowie Umfeldinformationen, beispielsweise von in Verbindung mit Fahrassistenzvorrichtungen in vielen Fahrzeugen verbauter Umfeldüberwachungsmittel. Diese können dazu benutzt werden, Personen, insbesondere Fußgänger in der unmittelbaren Umgebung des abgestellten eigenen Fahrzeugs zu detektieren und abhängig von deren voraussichtlicher Bewegung auf den Fahrbahnrand zu oder parallel zum Fahrbahnrand Stopplinien und Warnanzeigen parallel zum Straßenrand und/oder weiterführende Verkehrsinformationen, wie etwa Richtung und Distanz zur nächstgelegenen Fußgängerampel, oder beispielsweise individualisierte Werbeinformationen anzuzeigen.

Zusätzlich können sich dem eigenen Fahrzeug nähernde, am fließenden Verkehr teilnehmende andere Fahrzeuge detektiert werden, um hierauf die Projektion der Information anzupassen.

Denkbar ist zusätzlich die Projektion von Warnanzeigen für den fließenden Verkehr, beispielsweise auf die Fahrbahnoberfläche neben hinter oder vor dem eigenen Fahrzeug, wenn sich eine potentiell gefährdete Person dem Fahrbahnrand nähert.

Die Projektion kann mittels in bestehender oder eigens hierfür vorgesehener Fahrzeugleuchten verbauter Projektionsmittel, beispielsweise Projektoren erfolgen.

Die Projektion einhergehend mit der aktiven Detektion kann abhängig vom Ladezustand der Bordbatterie, Standort des eigenen Fahrzeugs, Uhrzeit, Witterungsbedingungen vorgenommen werden.

Vorteilhaft wird die Ausführung des Verfahrens ausgesetzt, wenn ein ausschließlich für die Stromversorgung von zur Durchführung des Verfahrens in einem Fahrzeug verbaute Mittel vorgesehener elektrischer Energiespeicher des eigenen Fahrzeugs erschöpft ist und/oder ein nicht ausschließlich hierfür verwendeter elektrischer Energiespeicher des eigenen Fahrzeugs eine vorgebbare Restladung unterschreitet. Diese kann bei Elektrofahrzeugen die Fahrt zum Heimatstandort berücksichtigen, bei Fahrzeugen mit Verbrennungsmotor die zum Anlassen erforderliche Energiemenge oder ein Vielfaches hiervon.

Ebenfalls ersichtlich ist, dass die Erfindung durch eine Fahrzeugleuchte verwirklicht sein kann, welche zur Erfassung von zur Durchführung des Verfahrens erforderliche Verkehrs- und/oder Umgebungsinformationen notwendige Mittel, beispielsweise geeignete Sensoren und Erfassungsmittel und/oder mit an einem Fahrzeug verbauten Sensoren und/oder Erfassungsmitteln und/oder auf solche zurückgreifende Fahrassistenzvorrichtungen verbundene Schnittstellen, beispielsweise Eingänge und/oder elektrische Anschlüsse aufweist, zur Auswertung der Verkehrs- und/oder Umgebungsinformationen sowie der Erzeugung der Darstellung erforderliche Auswertemittel, beispielsweise Mikroprozessoren, Computer, Datenspeicher, sowie zur Ausgabe der die Darstellung umfassenden Information geeignete Projektionsmittel, beispielsweise einen Projektor, umfasst.

Die Fahrzeugleuchte umfasst darüber hinaus beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Wichtig ist hervorzuheben, dass die Erfindung alternativ oder zusätzlich verwirklicht sein kann durch eine Fahrzeugleuchte zur Generierung neuer Werbeflächen und/oder Erhöhung der Verkehrssicherheit, welche ausschließlich bei abgestelltem eigenem Fahrzeug betrieben wird und entsprechende Mittel zur Ausführung des Verfahrens umfasst oder wie zur voranstehend beschriebenen Fahrzeugleuchte bereits erwähnt über Mittel verfügt, die einen Zugriff auf hierzu erforderliche Daten und/oder Dienste ermöglichen, um entsprechende Informationen zu erzeugen sowie wiederzugeben, insbesondere auszugeben und/oder anzuzeigen.

Sich zusätzlich zu einer vollständigen Lösung der gestellten Aufgabe ergebende technische Vorteile der Erfindung gegenüber dem Stand der Technik sind die Beseitigung der einleitend geschilderten Nachteile einhergehend mit einer Steigerung der Verkehrssicherheit für Personen, insbesondere Fußgänger im Parkraum.

Darüber hinaus gehende Vorteile ergeben sich durch eine Einsparung von lokaler Infrastruktur, da diese für beispielsweise erforderliche andere Einsatzzwecke zumindest zum Teil ohnehin bereits in im Parkraum abgestellten Fahrzeugen, insbesondere Kraftfahrzeugen verbaut sind. Mehrkosten für gegebenenfalls darüber hinaus im eigenen Fahrzeug erforderliche Einrichtungen und Mittel können beispielsweise durch Verleih und/oder Vermietung der Ausgabemöglichkeit von Informationen in den zwischen den Warnungen potentiell gefährdeter Personen liegenden Zeitabschnitten an Werbetreibende amortisiert werden.

Ferner ergibt sich der Vorteil, mit der Ausgabe von Werbung umfassenden Informationen in den zwischen den Warnungen potentiell gefährdeter Personen liegenden Zeitabschnitten mehr Menschen durch Werbung zu erreichen, als bisher. Dies bezieht sich zum einen auf die Personenmenge als auch auf die Orte an denen Werbung verfügbar gemacht werden kann sowie auf den für den Ort und/oder die Zielgruppe individualisierbaren Inhalt, wie etwa maßgeschneiderter, bildlicher Inhalt.

Eine oder beide der erwähnten Fahrzeugleuchten können einzelne oder eine Kombination der zuvor und/oder nachfolgend in Verbindung mit dem Verfahren beschriebene Merkmale aufweisen, ebenso wie das Verfahren einzelne oder eine Kombination mehrerer zuvor und/oder nachfolgend in Verbindung mit einer Fahrzeugleuchte beschriebene Merkmale aufweisen und/oder verwirklichen kann.

Das Verfahren kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Es zeigen in schematischer Darstellung:
- Fig. 1: ein Ablaufdiagramme eines Verfahrens zur Erzeugung und Wiedergabe von Informationen zumindest mittels in einer Fahrzeugleuchte eines abgestellten, eigenen Fahrzeugs beherbergter Projektionsmittel.
- Fig. 2: ein eigenes Fahrzeug mit in zumindest einer dessen Fahrzeugleuchten beherbergten Projektionsmitteln zur Wiedergabe von mittels eines Verfahrens zur Erzeugung und Wiedergabe von Informationen zumindest mittels in einer Fahrzeugleuchte eines abgestellten, eigenen Fahrzeugs beherbergter Projektionsmittel erzeugter Informationen in perspektivischer Ansicht.
- Fig. 3: ein erstes Ausführungsbeispiel einer von einer Information umfassten, vermittels Projektion eines Bilds wiedergegebenen Darstellung einer Warnung einer potentiell gefährdeten Person.
- Fig. 4: ein zweites Ausführungsbeispiel einer von einer Information umfassten, vermittels Projektion eines Bilds wiedergegebenen Darstellung einer Warnung einer potentiell gefährdeten Person.
- Fig. 5: ein drittes Ausführungsbeispiel einer von einer Information umfassten, vermittels Projektion eines Bilds wiedergegebenen Darstellung einer Warnung einer potentiell gefährdeten Person.
- Fig. 6: ein viertes Ausführungsbeispiel einer von einer Information umfassten, vermittels Projektion eines Bilds wiedergegebenen Darstellung einer Warnung einer potentiell gefährdeten Person.

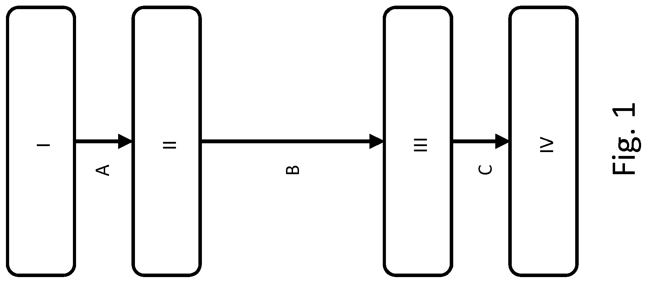

Ein in Fig. 1 in seinem Ablauf dargestelltes Verfahren zur Erzeugung und Wiedergabe von Informationen 01 zumindest mittels in einer Fahrzeugleuchte 02 eines abgestellten, eigenen Fahrzeugs 03 beherbergter Projektionsmittel, sieht in einem ersten Verfahrensschritt I eine Erfassung von Verkehrsinformationen im Umkreis einschließlich der näheren Umgebung des eigenen Fahrzeugs 03 mittels fahrzeugeigener Erfassungsmittel des abgestellten eigenen Fahrzeugs 03 und/oder fahrzeugeigener Informationsquellen des abgestellten eigenen Fahrzeugs 03 vor.

Diese Verkehrsinformationen umfassen mindestens das Vorhandensein und den Verlauf von Fuß- und Verkehrswegen sowie Orte und Bewegungen herannahender anderer Fahrzeuge und von Personen im Umkreis, insbesondere der näheren Umgebung des eigenen Fahrzeugs 03.

Das Verfahren sieht in einem wie durch einen Pfeil A in Fig. 1 dargestellt auf den ersten Verfahrensschritt I folgenden zweiten Verfahrensschritt II eine Auswertung der Verkehrsinformationen vor, mit dem Ziel der Erkennung einer potentiellen Gefährdung einer Person in unmittelbarer Nähe des eigenen Fahrzeugs 03.

Eine solche Gefährdung kann beispielsweise anhand einer eine stete Bewegung einer Person etwa auf einen Fahrbahnrand anzeigende wiederholten Erfassung ein und der selben Person in zunehmend kleineren Abständen zum erwähnten Fahrbahnrand erkannt werden. Auch kann durch Berechnung eines Kollisionsorts mit einem herannahenden anderen Fahrzeug bestimmt werden, ob eine Gefährdung vorliegt, oder nicht. Lässt sich kein Kollisionsort unter gegenwärtiger Bewegungsrichtung und - geschwindigkeit ermitteln, kommt es zu keiner Gefährdung zwischen der Person und dem jeweiligen anderen Fahrzeug, wohingegen bei errechenbarem Kollisionsort eine akute Gefährdungslage vorliegt.

Allgemein können hierzu aus der Seefahrt bekannte Muster zur Kollisionserkennung, wie etwa unverändert anhaltende Geschwindigkeit und Kurs beziehungsweise Bewegungsrichtung auf einen errechneten Kollisionsort zu verwendet werden.

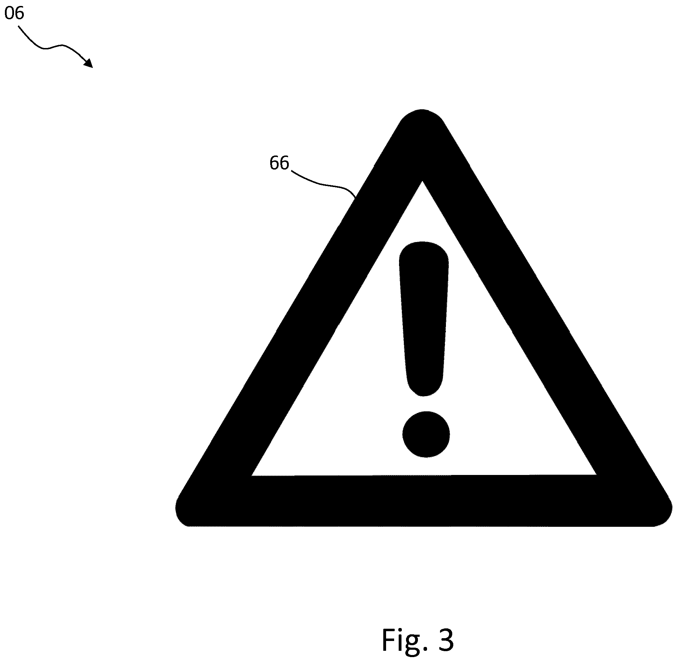

In einem wie durch einen Pfeil B in Fig. 1 dargestellt auf den zweiten Verfahrensschritt II folgenden dritten Verfahrensschritt III sieht das Verfahren eine Erzeugung einer auf die Gefährdung hinweisenden, in beispielhaften Ausgestaltungen in Fig. 3, Fig. 4, Fig. 5, Fig. 6 gezeigten Darstellung 06 vor.

Die Erzeugung der Darstellung 06 kann anhand der im Parkraum des abgestellten eigenen Fahrzeugs 03 vorliegenden Gegebenheiten erfolgen.

Alternativ oder zusätzlich kann die Erzeugung eine Auswahl einer Darstellung 06 aus einer vorgegebenen, beispielsweise in einem Datenspeicher abgelegten Menge von beispielsweise situationsbezogenen Darstellungen 06 umfassen.

Alternativ oder zusätzlich kann die Erzeugung eine Auswahl einer in kurzer zeitlicher Folge die Situation wiedergebenden Reihe von Darstellungen 06 umfassen.

In einem wie durch einen Pfeil C in Fig. 1 dargestellt auf den dritten Verfahrensschritt III folgenden vierten Verfahrensschritt IV sieht das Verfahren eine Warnung wenigstens der potentiell gefährdeten Person vor deren Gefährdung vor.

Diese Warnung erfolgt verfahrensgemäß durch Ausgabe einer zumindest die im vorangehenden dritten Verfahrensschritt III erzeugte, auf die Gefährdung hinweisende Darstellung 06 umfassenden Information 01.

Die Ausgabe der Information 01 erfolgt verfahrensgemäß durch Projektion mindestens eines die Darstellung wiedergebenden Bilds 05 mittels mindestens einem in wenigstens einer Fahrzeugleuchte 02 des eigenen Fahrzeugs 03 beherbergter Projektionsmittel auf eine Fläche 04 im Parkraum in unmittelbarer Nähe des eigenen Fahrzeugs 03.

Die Erfindung betrifft demnach ein Verfahren zur Erzeugung und Wiedergabe von Informationen zumindest mittels in einer Fahrzeugleuchte 02 des abgestellten, eigenen Fahrzeugs 03 beherbergter Projektionsmittel, welches vorsieht, mittels fahrzeugeigener Erfassungsmittel und/oder fahrzeugeigener Informationsquellen, wie etwa satellitengestützter Standortbestimmung und Kartendaten eines abgestellten, eigenen Fahrzeugs 03 das Vorhandensein und den Verlauf von Fuß- und Verkehrswegen sowie Ort und Bewegungen anderer Fahrzeuge und von Personen umfassende Verkehrsinformationen im Umkreis einschließlich der näheren Umgebung des eigenen Fahrzeugs 03 zu erfassen, anhand einer Auswertung dieser Verkehrsinformationen eine potentielle Gefährdung einer Person in unmittelbarer Nähe des eigenen Fahrzeugs 03 zu erkennen, eine auf die Gefährdung hinweisende Darstellung 06 zu erzeugen und wenigstens die potentiell gefährdete Person durch Ausgabe einer zumindest die auf die Gefährdung hinweisende Darstellung umfassenden Information durch Projektion mindestens eines die Darstellung wiedergebenden Bilds 05 mittels mindestens einem in wenigstens einer Fahrzeugleuchte 02 des eigenen Fahrzeugs 03 beherbergter Projektionsmittel auf eine Fläche 04 im Parkraum in unmittelbarer Nähe des eigenen Fahrzeugs 03 hiervor zu warnen.

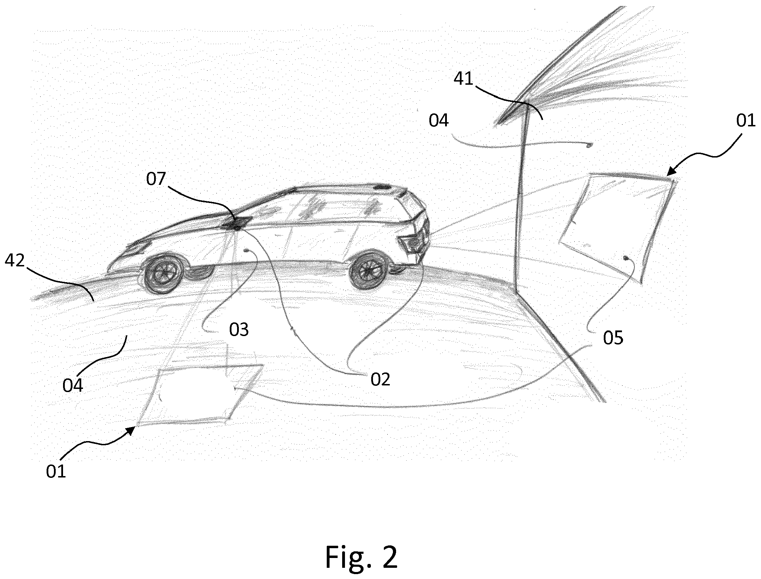

Bei der Fläche 04 kann es sich wie in Fig. 2 dargestellt um eine Wandfläche 41 oder um eine Bodenfläche 42 handeln oder um eine Kombination aus Wandfläche 41 und Bodenfläche 42.

Die von der Information 01 umfasste Darstellung 06 kann an die Ausrichtung, Art und Orientierung der Fläche 04 angepasst werden, beispielsweise je nachdem, ob es sich bei der Fläche um eine Wandfläche 41 oder um eine Bodenfläche 42 oder um eine Kombination aus Wandfläche 41 und Bodenfläche 42 handelt.

Die Anpassung der Darstellung 06 an die Fläche 04 kann beispielsweise vorgenommen werden, um eine verzerrungsfreie Wiedergabe der kurz als Bildinformation bezeichneten bildlichen Information zu erhalten.

Darüber hinaus ist eine Anpassung der Darstellung an die Beschaffenheit und/oder Farbe der Fläche 04 vorgenommen werden, beispielsweise um Farb- und/oder Helligkeitsunterschiede auf verschiedenen Partien einer Fläche 04 auszugleichen und/oder um eine zur einwandfreien Wahrnehmung durch die potentiell gefährdete Person hinreichende Helligkeit sicherzustellen.

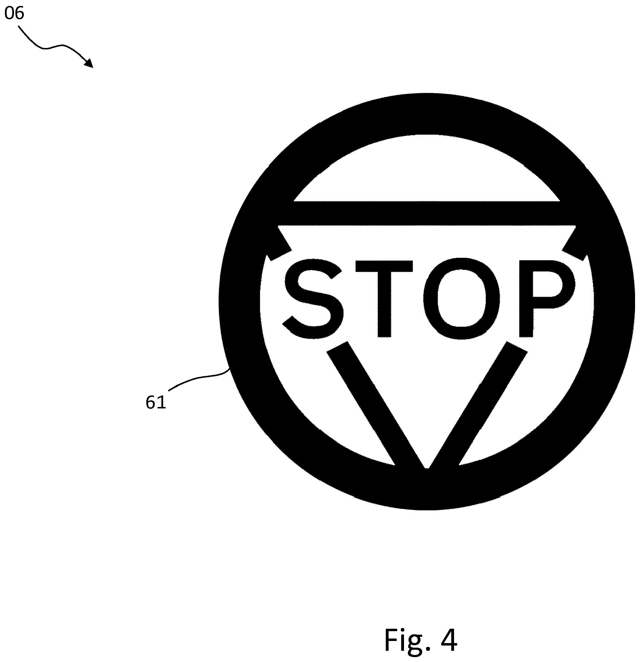

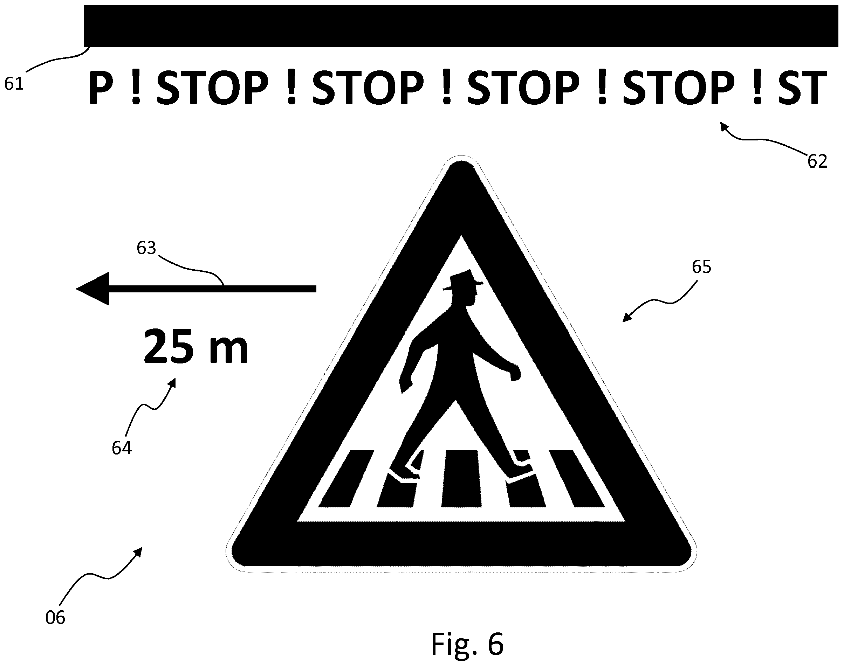

Die Darstellung 06 kann eine Grafik, insbesondere wie in Fig. 4 und in Fig. 6 dargestellt eine Stoppmarkierung 61, insbesondere eine Stopplinie umfassen, bei deren Übertretung der Parkraum des eigenen Fahrzeugs 03 verlassen und ein Verkehrs-, insbesondere Fahrweg anderer Fahrzeuge beschritten wird.

Die Darstellung 06 kann Warnungen und Hinweise umfassen, etwa wie in Fig. 6 dargestellt eine besonders die Aufmerksamkeit von intensiv ihr Smartphone nutzenden Personen auf sich ziehenden Laufschrift 62.

Die Darstellung 06 kann einen Hinweis auf eine sichere Überquerungsmöglichkeit des Verkehrs-, insbesondere Fahrwegs anderer Fahrzeuge in der Nähe des eigenen Fahrzeugs 03 umfassen, beispielsweise eine Richtungsangabe 63, etwa einen Pfeil, in welcher Richtung sich eine solche Überquerungsmöglichkeit befindet, und/oder eine Entfernungsangabe 64, wie weit es bis zu einer solchen Überquerungsmöglichkeit ist.

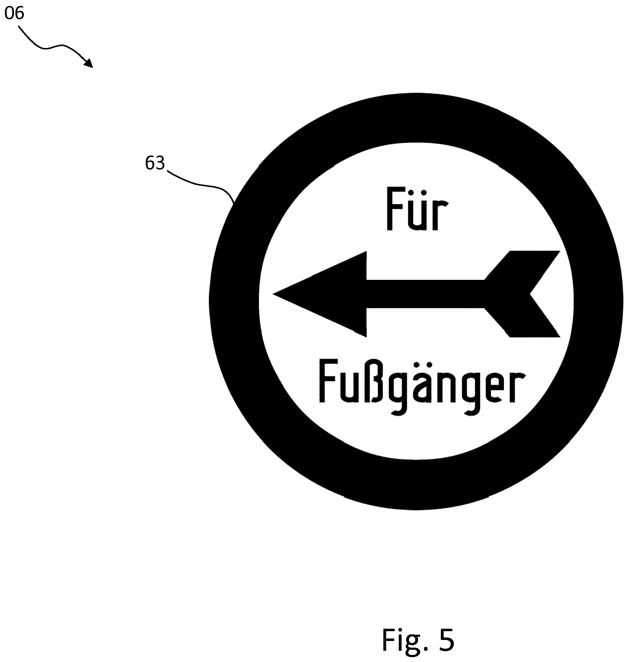

Die Darstellung 06 kann beispielsweise wie in Fig. 5 und in Fig. 6 dargestellt eine Richtungsangabe 63 zu einer sicheren Überquerungsmöglichkeit einer Fahrbahn umfassen.

Die Darstellung 06 kann beispielsweise wie in Fig. 6 dargestellt eine Entfernungsangabe 64 zu einer sicheren Überquerungsmöglichkeit einer Fahrbahn umfassen.

Die Darstellung 06 kann wie in Fig. 6 dargestellt eine schematische Wiedergabe 65 der Art der nächsten Überquerungsmöglichkeit einer Fahrbahn umfassen, beispielsweise einer Ampelanlage oder eines Fußgängerüberwegs.

Alternativ oder zusätzlich hinaus kann die Darstellung 06 sich der im Straßenverkehr üblichen, geläufigen Warnzeichen bedienen, beispielsweise wie in Fig. 3 dargestellt einer Warnanzeige 66.

Die Information 01 kann zusätzlich zur Ausgabe der zumindest die auf die Gefährdung hinweisende Darstellung 06 auf eine Fläche 04 vor oder im Blickfeld einer potentiell gefährdeten Person eine Ausgabe eines Warnhinweises an ein herannahendes anderes Fahrzeug umfassen, beispielsweise durch Projektion eines Warnhinweises beispielsweise in Form eines auf eine potentielle Gefahrenstelle hinweisenden Warnzeichens auf den Boden des Verkehrs-, insbesondere Fahrwegs vor einem herannahenden anderen Fahrzeug und/oder die Ausgabe eines Warn-, beispielsweise Lichtsignals an das herannahende andere Fahrzeug, insbesondere Kraftfahrzeug, Fahrrad.

Die Information 01 kann demnach kann eine Projektion eines Warnhinweises in Form eines auf eine potentielle Gefahrenstelle hinweisenden Warnzeichens auf den Boden des Verkehrs-, insbesondere Fahrwegs vor einem herannahenden anderen Fahrzeug und/oder die Ausgabe eines Warn-, beispielsweise Lichtsignals an das herannahende andere Fahrzeug, insbesondere Kraftfahrzeug, Fahrrad, umfassen.

Die Information 01 kann zusätzlich zur Projektion mindestens eines Bilds 05 auf eine Fläche 04 in der Umgebung des eigenen Fahrzeugs 03 ein Tonsignal als Warnsignal umfassen.

Die Information 01 kann beispielsweise ein zumindest zeitweiliges Sprach- und/oder SOS-Tonsignal umfassen, wenn eine als potentiell gefährdet erkannte Person verunfallt ist, beispielsweise die Information ignoriert hat und von einem herannahenden anderen Fahrzeug erfasst wurde.

Das Verfahren kann in diesem Zusammenhang auch vorsehen, bei Personen, welche plötzlich und ohne erkennbaren Grund oder Beteiligung Dritter, beispielsweise aufgrund eines Anfalls, etwa eines Schwächeanfalls oder eines Infarkts, zusammenbrechen oder sich in ungewöhnlicher Weise in der Nähe des eigenen Fahrzeugs 03 abstützen, eine Information auszugeben, welche Dritte auf diesen besonderen Umstand einer verletzten und/oder handlungseingeschränkten und/oderunfähigen Person hinzuweisen, mit dem Ziel, schnellstmöglich Hilfe herbeizuholen.

Das SOS-Tonsignal - dreimal kurz, dreimal lang und wieder dreimal kurz - wird auch ohne Sprachausgabe von vielen Menschen nach wie vor als Notsignal erkannt und kann durch einfachste Signalmittel erzeugt und ausgegeben werden.

Das Sprach- und/oder SOS-Tonsignal kann bei einem im Umfeld erkannten Unfall zumindest zeitweilige ausgegeben werden und/oder wenn ein Verunfallen, beispielsweise ein Sturz einer Person im Umkreis einschließlich der näheren Umgebung des Fahrzeugs erfassten worden ist.

Das Tonsignal kann ein Geräusch quietschender Reifen umfassen, wie es bei der Vollbremsung eines Fahrzeugs auftritt, um intensive Benutzer von Mobiltelefonen, insbesondere Smartphones, bezüglich deren Fehlverhalten und Selbstgefährdung im Straßenverkehr zu sensibilisieren.

Die Ausgabe von Tonsignalen kann durch im eigenen Fahrzeug ohnehin verbaute akustische Signalmittel erfolgen, beispielsweise Horn, Hupe, Sirene, Alarmanlage, Schließeinrichtung.

Alternativ oder zusätzlich kann die Ausgabe von Tonsignalen anhand hierzu in einer oder mehreren Fahrzeugleuchten, wie etwa Front- und/oder Heckleuchten, Seitenmarkierungsleuchten, Begrenzungsleuchten, separat, beispielsweise in den Außenrückblickspiegelgehäusen untergebrachte Wiederholblinkleuchten und/oder direkt vorzugsweise an der Unterseite der Außenrückblickspiegelgehäusen angeordneten Lautsprechern erfolgen.

Eine vorteilhafte Ausgestaltung des Verfahrens sieht vor, dass die Information 01 die Weiterleitung einer Mitteilung an eine Notrufzentrale umfasst. Dies erfolgt bevorzugt in solchen Fällen, in denen ein Verunglücken einer Person, beispielsweise durch die Erfassung einer Kollision mit einem herannahenden anderen Fahrzeug, oder in denen eine Person plötzlich und ohne erkennbaren Grund oder Beteiligung Dritter, beispielsweise aufgrund eines Anfalls, etwa eines Schwächeanfalls oder eines Infarkts, zusammenbricht oder sich in ungewöhnlicher Weise in der Nähe des eigenen Fahrzeugs 03 abstützt.

Eine zusätzliche Ausgestaltung des Verfahrens sieht vor, dass die Information 01 zumindest in der Zeit oder einem Teil der Zeit, in der zwar Personen im Umkreis einschließlich der näheren Umgebung des eigenen Fahrzeugs 03 erfasst werden, diese jedoch keiner potentiellen Gefährdung ausgesetzt sind, Werbung in Bild und/oder Ton umfasst.

Hierdurch wird der Beitrag des Verfahrens zu einer nachhaltigen Steigerung der Verkehrssicherheit nicht eingeschränkt, weil im Falle einer potentiellen Gefährdung einer Person die Ausgabe von Werbung als Teil der Information unterbunden, beispielsweise unterbrochen werden kann.

Besonders vorteilhaft ist vorgesehen, dass die Ausführung des Verfahrens ausgesetzt wird, wenn ein für die Stromversorgung von zur Durchführung des Verfahrens im eigenen Fahrzeug 03 verbaute Mittel vorgesehener elektrischer Energiespeicher des eigenen Fahrzeugs 03 einen vorgegebenen Schwellenwert für dessen Restladung unterschreitet, beispielsweise ein ausschließlich für die Stromversorgung von zur Durchführung des Verfahrens im eigenen Fahrzeug 03 verbaute Mittel vorgesehener elektrischer Energiespeicher des eigenen Fahrzeugs 03 erschöpft ist und/oder ein nicht ausschließlich hierfür verwendeter elektrischer Energiespeicher des eigenen Fahrzeugs 03 eine vorgebbare Restladung unterschreitet.

Die vorgebbare Restladung kann bei Elektrofahrzeugen die voraussichtlich benötigte Energiemenge für eine Fahrt zum Heimatstandort oder zu einem im Navigationssystem des eigenen Fahrzeugs 03 eingegebenen, noch nicht erreichten Ziel- oder Etappenort berücksichtigen, bei Fahrzeugen mit Verbrennungsmotor die zum Anlassen erforderliche Energiemenge oder ein Vielfaches hiervon.

Demnach kann die Projektion einhergehend mit der aktiven Detektion der Umgebung bei der Erfassung der das Vorhandensein und den Verlauf von Fuß- und Verkehrswegen sowie der Orte und der Bewegungen anderer Fahrzeuge und von Personen umfassenden Verkehrsinformationen im Umkreis einschließlich der näheren Umgebung des eigenen Fahrzeugs 03 abhängig vom Ladezustand beispielsweise der Bordbatterie vorgenommen werden.

Insbesondere bei Elektrofahrzeugen, die an einer Ladestation stehen ist dies vorteilhaft, da hier endlos Energie - auch für die Projektion - zur Verfügung steht.

Darüber hinaus kann die Ausführung des Verfahrens abhängig vom Standort des eigenen Fahrzeugs 03, beispielsweise einem regelmäßigen nächtlichen Abstellplatz des eigenen Fahrzeugs 03, insbesondere in einem Wohngebiet und/oder auf einem Privatgrundstück und/oder von der Uhrzeit und/oder von den Witterungsbedingungen vollständig oder zum Teil ausgesetzt werden.

Ein teilweises Aussetzen des Verfahrens kann beispielsweise die Ausgabe von Tonsignale und/oder Werbung umfassenden Informationen betreffen, wohingegen die Warnung von sich dem Fahrbahnrand nähernden Personen, etwa spielenden Kindern, durchaus in einem Wohngebiet besonders vorteilhaft beibehalten wird.

Vorteilhaft wird die Ausführung des Verfahrens ausgesetzt, wenn ein ausschließlich für die Stromversorgung von zur Durchführung des Verfahrens in einem Fahrzeug verbaute Mittel vorgesehener elektrischer Energiespeicher des eigenen Fahrzeugs erschöpft ist und/oder ein nicht ausschließlich hierfür verwendeter elektrischer Energiespeicher des eigenen Fahrzeugs eine vorgebbare Restladung unterschreitet.

Es ist ersichtlich, dass die Erfindung die Aufgabe einer Steigerung der Verkehrssicherheit durch die Erfassung und Erkennung, ob sich Personen in der Umgebung des parkenden, abgestellten eigenen Fahrzeugs 03 in potentiell gefährlicher Situationen hineinbewegen, und Ausgabe einer vor der gefährlichen Situation warnenden Information 01 umfassend eine fahrzeugeigene Projektion zumindest eines Teils der Information 01 auf eine Fläche 04 in der Umgebung des eigenen Fahrzeugs 03, insbesondere auf eine Bodenfläche 42 des dieses umgebenden Boden löst.

Hierbei kann auf fahrzeugspezifische Informationsquellen zurückgegriffen werden, insbesondere beispielsweise satellitengestützte Navigationsinformationen sowie Umfeldinformationen, beispielsweise von in Verbindung mit Fahrassistenzvorrichtungen in vielen Fahrzeugen verbauter Umfeldüberwachungsmittel. Diese können dazu benutzt werden, Personen, insbesondere Fußgänger in der unmittelbaren Umgebung des abgestellten eigenen Fahrzeugs 03 zu detektieren und abhängig von deren voraussichtlicher Bewegung auf den Fahrbahnrand zu oder parallel zum Fahrbahnrand Stopplinien und Warnanzeigen parallel zum Straßenrand und/oder weiterführende Verkehrsinformationen, wie etwa Richtung und Distanz zur nächstgelegenen Fußgängerampel, anzuzeigen.

Überraschende Vorteile des Verfahrens ergeben sich dadurch, dass es zumindest in solchen Zeitabschnitten, in denen zwar Personen in der Umgebung des eigenen Fahrzeugs 03 erfasst werden, diese jedoch keiner potentiellen Gefährdung ausgesetzt sind, die Möglichkeit schafft, diesen Personen vorzugsweise personalisierte Informationen, beispielsweise in Form von Werbung, Hinweispfeilen hin zu deren Zielort, Hinweise zu Überquerungsmöglichkeiten etc. zukommen zu lassen.

Zusätzlich können sich dem eigenen Fahrzeug 03 nähernde, am fließenden Verkehr teilnehmende andere Fahrzeuge detektiert werden, um hierauf die Projektion der Information anzupassen.

Denkbar ist zusätzlich die Projektion von Warnanzeigen für den fließenden Verkehr, beispielsweise auf die Fahrbahnoberfläche neben hinter oder vor dem eigenen Fahrzeug, wenn sich eine potentiell gefährdete Person dem Fahrbahnrand nähert.

Die Projektion kann mittels in bestehender oder eigens hierfür vorgesehener Fahrzeugleuchten 02 verbauter Projektionsmittel, beispielsweise Projektoren erfolgen.

Ebenfalls ersichtlich ist, dass die Erfindung durch eine Fahrzeugleuchte 02 verwirklicht sein kann, welche zur Erfassung von zur Durchführung des Verfahrens erforderliche Verkehrs- und/oder Umgebungsinformationen notwendige Mittel, beispielsweise geeignete Sensoren und Erfassungsmittel und/oder mit an einem Fahrzeug 03 verbauten Sensoren und/oder Erfassungsmitteln und/oder auf solche zurückgreifende Fahrassistenzvorrichtungen verbundene Schnittstellen, beispielsweise Eingänge und/oder elektrische Anschlüsse aufweist, zur Auswertung der Verkehrs- und/oder Umgebungsinformationen sowie der Erzeugung der Darstellung erforderliche Auswertemittel, beispielsweise Mikroprozessoren, Computer, Datenspeicher, sowie zur Ausgabe der die Darstellung umfassenden Information geeignete Projektionsmittel, beispielsweise einen Projektor, umfasst.

Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Grundsätzlich kann eine Fahrzeugleuchte 02 am eigenen Fahrzeug 03 angeordnet sein, welche ausschließlich der Projektion des Bilds 05 der Information 01 dient.

Die Fahrzeugleuchte 02 kann darüber hinaus beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel zur Erfüllung und/oder Beitrag wenigstens einer zur Teilnahme am Straßenverkehr vorgeschriebene Lichtfunktion der Fahrzeugleuchte 02 umfassen.

Zur Teilnahme am Straßenverkehr vorgeschriebene Lichtfunktionen sind beispielsweise bei einer Ausgestaltung der Fahrzeugleuchte 02 als Scheinwerfer eine die Fahrbahn ausleuchtende Funktion, oder bei einer Ausgestaltung der Fahrzeugleuchte 02 als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung der Fahrzeugleuchte 02 als Heckleuchte oder Tagfahrleuchte.

Das Leuchtengehäuse bzw. der Leuchteninnenraum einer Fahrzeugleuchte 02 kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Eine dieser Kammern kann ausschließlich der Projektion des Bilds 05 der Information 01 dienende Projektionsmittel beherbergen.

Wichtig ist hervorzuheben, dass die Erfindung alternativ oder zusätzlich verwirklicht sein kann durch eine Fahrzeugleuchte 02 zur Generierung neuer Werbeflächen und/oder Erhöhung der Verkehrssicherheit, welche ausschließlich bei abgestelltem eigenem Fahrzeug betrieben wird und entsprechende Mittel zur Ausführung des Verfahrens umfasst oder wie zur voranstehend beschriebenen Fahrzeugleuchte 02 bereits erwähnt über Mittel verfügt, die einen Zugriff auf hierzu erforderliche Daten und/oder Dienste ermöglichen, um entsprechende Informationen zu erzeugen sowie wiederzugeben, insbesondere auszugeben und/oder anzuzeigen.

Ebenfalls wichtig ist hervorzuheben, dass die Erfindung alternativ oder zusätzlich durch eine Außenrückblickspiegelanordnung 07 verwirklicht sein, welche zur Erfassung von zur Durchführung des Verfahrens erforderliche Verkehrs- und/oder Umgebungsinformationen notwendige Mittel, beispielsweise geeignete Sensoren und Erfassungsmittel und/oder mit an einem Fahrzeug 03 verbauten Sensoren und/oder Erfassungsmitteln und/oder auf solche zurückgreifende Fahrassistenzvorrichtungen verbundene Schnittstellen, beispielsweise Eingänge und/oder elektrische Anschlüsse aufweist, zur Auswertung der Verkehrs- und/oder Umgebungsinformationen sowie der Erzeugung der Darstellung erforderliche Auswertemittel, beispielsweise Mikroprozessoren, Computer, Datenspeicher umfasst, sowie eine zur Ausgabe der die Darstellung umfassenden Information geeignete Projektionsmittel, beispielsweise einen Projektor, beherbergende Fahrzeugleuchte 02 umfasst.

Eine Außenrückblickspiegelanordnung 07 für ein Fahrzeug 03 besteht im Wesentlichen aus einem zur kraftfahrzeugseitigen Anordnung vorgesehenen Spiegelfuß und einem an und gegenüber diesem verstellbar angeordneten Spiegelkopf mit einem Spiegelglas.

Der Spiegelfuß kann mittels einer Spiegelfußabdeckung verkleidet sein. Der Spiegelfuß kann beispielsweise als Druckgussteil aus einem den auftretenden Kräften und Momenten widerstehenden Werkstoff hergestellt sein.

Der Spiegelkopf umfasst ein Außenrückblickspiegelgehäuse, welches unter anderem einen dem Spiegelfuß zugeordneten Grundträger beherbergen kann oder dieses umfasst. Der Grundträger kann ebenfalls als Druckgussteil aus einem den auftretenden Kräften und Momenten widerstehenden Werkstoff hergestellt sein, beispielsweise aus dem selben Werkstoff wie der Spiegelfuß.

Spiegelfuß und Spiegelkopf sind gelenkig miteinander verbunden, so dass der Spiegelkopf gegenüber dem Spiegelfuß aus einer Betriebsstellung in eine Anklappstellung und umgekehrt um eine Gelenkachse verschwenkbar ist. Zwischen Spiegelfuß und Spiegelkopf können Lagermittel vorgesehen sein, um Verschleiß und auftretende Reibungskräfte während des Verschwenkens möglichst gering zu halten.

Der Spiegelkopf umfasst eine beispielsweise elektromotorisch betätigbare Verstellanordnung für ein Spiegelglas. Beispielsweise ist diese auf dem Grundträger im Außenrückblickspiegelgehäuse beherbergt angeordnet. Die Verstellanordnung wirkt auf eine Trägerplatte ein, auf der das Spiegelglas angeordnet ist. Das Spiegelglas kann mittels einer Klebeverbindung auf der Trägerplatte montiert sein. Die Trägerplatte kann an der Verstellanordnung und/oder an der Grundplatte geführt und/oder gelagert sein. Der Begriff Trägerplatte bezeichnet hierbei einen Träger, der zumindest eine eben oder gewölbt ausgeführte, geschlossene oder gitterförmig unterbrochene, z.B. wabenförmige Trägerfläche aufweist, die geeignet ist, um darauf ein Spiegelglas etwa mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Das Außenrückblickspiegelgehäuse weist auf seiner in Betriebsstellung der Fahrtrichtung des Fahrzeugs 03 abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Spiegelkopf kann darüber hinaus eine beispielsweise als eine Wiederholblinkleuchte ausgestaltete Fahrzeugleuchte, ein beheizbares Spiegelglas, ein elektrochromatisch abblendbares Spiegelglas, ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Alternativ oder zusätzlich kann der Spiegelkopf wenigstens einen Sensor zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen und/oder z.B. elektrochromatisch abzublenden.

Im Hinblick auf Komfort sei darüber hinaus auf eine Umfeldbeleuchtung verwiesen, welche zumindest bei geöffneter Fahrzeugtür eine Beleuchtung des Bodens neben dem Fahrzeug bei Dunkelheit vorsieht, die heutzutage gerne durch Unterbringung von Ausstiegsleuchten im Spiegelkopf verwirklicht wird.

Alternativ zu einer getrennten Anordnung einer zur Ausgabe der die Darstellung umfassenden Information geeignete Projektionsmittel, beispielsweise einen Projektor, beherbergenden Fahrzeugleuchte 02 und einer weiteren Fahrzeugleuchte, beispielsweise zur Umfeldbeleuchtung und/oder einer Wiederholblinkleuchte, kann eine gemeinsame, beispielsweise in mehrere Kammern unterteilte Fahrzeugleuchte 02 vorgesehen sein, welche beispielsweise in getrennten Kammern sowohl zur Ausgabe der die Darstellung umfassenden Information geeignete Projektionsmittel beherbergt, als auch mindestens ein zur Erfüllung und/oder zum Beitrag beispielsweise einer zur Teilnahme des eigenen Fahrzeugs 03 am Straßenverkehr gesetzlich vorgeschriebenen Lichtfunktion und/oder einer Komfort-Lichtfunktion, wie beispielsweise einer Umfeldbeleuchtung, vorgesehenes Leuchtmittel.

Zusammengefasst sieht die Erfindung vor an einem eigenen Fahrzeug 03 - vorzugsweise einem Kraftfahrzeug - mindestens eine durch Projektionsmittel, beispielsweise durch einen Projektor, verwirklichte und/oder Projektionsmittel, beispielsweise einen Projektor, beherbergende Fahrzeugleuchte 02 und/oder einen oder eine Kombination von beidem zu installieren, welche eine Projektion einer beispielsweise ein oder mehrere Bilder 05 und/oder einen Film und/oder einer Animation umfassenden Information 01 auf eine Fläche 04, vorzugsweise eine Bodenfläche 42, vorzugsweise der Straße oder des Gehwegs und/oder einer Wandfläche auszugeben vermag, die potentiell beispielsweise durch einen möglichen Verkehrsunfall in der Umgebung des eigenen Fahrzeugs 03 gefährdete Personen vor der möglichen Gefahr warnt.

Durch potentiell gefährdete Personen warnende Informationen bildende, abgestrahlte Bilder 05 ist es mit den beispielsweise ein Projektorsystem umfassenden Projektionsmitteln möglich mit der Umwelt zu kommunizieren, etwa zu warnen, und so die Verkehrssicherheit zu erhöhen.

Auch ist es möglich mit einem derartigen System in einer besonderen Ausbauform ein Hologramm darzustellen.

Durch die am eigenen Fahrzeug 03 befindlichen, beispielsweise mindestens einen Projektor beziehungsweise ein optisches und/oder optoelektronisches und/oder optoelektromechanisches System umfassenden Projektionsmittel können Darstellungen 06, wie etwa Texte, Bilder, Filme, oder ähnliches auf eine Fläche 04 projiziert werden, wie in Fig. 3, Fig. 4, Fig. 5, Fig. 6 schematisch angedeutet. Die beispielsweise einen Projektor umfassenden Projektionsmittel können dabei in einer zur Erfüllung der Zulassungsvoraussetzungen des eigenen Fahrzeugs 03 ohnehin verbauten Fahrzeugleuchte 02, oder in einer zur verfahrensgemäßen Wiedergabe der Informationen eigens am eigenen Fahrzeug beispielsweise an oder in einem Spoiler oder im Außenrückblickspiegel verbaute Fahrzeugleuchte 02 beherbergt sein.

Vorzugsweise kann die Projektion zumindest zum Teil für Werbung eingesetzt werden.

Zusätzlich zu einer nachhaltigen Steigerung der Verkehrssicherheit erweitert die Erfindung so den Spielraum für das Platzieren von Werbung dadurch, dass das eigene Fahrzeug 03 mit den installierten Systemen an unterschiedlichen Orten geparkt werden kann, die sich schwer oder nicht für andere Arten der einleitend erwähnten Werbeformen nutzen lassen.

Solcherlei Werbung kann beispielsweise in die Kategorie Guerilla-Marketing eingeordnet werden.

Durch geeignete fahrzeugeigene Einrichtungen, wie etwa Satellitennavigationsempfangseinrichtungen, welche durch Empfang von anhand von im Orbit stationierten Navigationssatellitengruppen, wie etwa GPS (Global Positioning System) GLONASS (Globales Navigationssatellitensystem), Galileo, BDS (Beidou) ausgesendeten Funksignalen ist der Standort des parkenden, abgestellten eigenen Fahrzeugs 03 hinreichend oder mittels entsprechender Derivate, wie etwa Differential-GPS, exakt bekannt. Die Positionsdaten können beispielsweise mittels Funk oder eines entsprechend ausgerüsteten Mobiltelefons im eigenen Fahrzeug 03 zu einer Empfangsstelle zur Weiterverarbeitung übertragen werden. Auch können mit dieser Kommunikationseinrichtung Daten zurück in Richtung des eigenen Fahrzeugs 03 gesendet werden. Hierdurch kann für den Standort passende Werbung aus dem parkenden, abgestellten eigenen Fahrzeug 03 projiziert werden. Durch weitere Sensoren am eigenen Fahrzeug 03, beispielsweise bildgebende Sensoren, wie etwa Kameras, vorzugsweise mit so genannter Bird-View-Funktionalität, können beispielsweise Bilder 05, wie von dem Werbeausstrahler genau für diesen Ort gewünscht, projiziert werden.

Hierzu sind verschiedene (Geschäfts-) Modelle denkbar: Der Eigentümer und/oder Besitzer des eigenen Fahrzeugs 03 und somit das Fahrzeug mit den Projektoren, kann sich bei einer entsprechend spezialisierten Werbefirma registrieren, die in Abhängigkeit der Lage des Fahrzeugs passende Werbung schalten kann. Beispielsweise abhängig vom Standort des eigenen Fahrzeugs 03 kann eine veränderliche Höhe der Vergütung an den Eigentümer und/oder Besitzer des eigenen Fahrzeugs 03 ausfallen. Damit lässt sich somit das eigene Fahrzeug 03 für Werbezwecke vermieten, ohne dass bauliche Anpassungen am eigenen Fahrzeug 03 vorgenommen werden müssen oder es beklebt werden muss, wie dies bisher für eine Verwendung zu Werbezwecken der Fall ist.

Auch können neue Werbeflächen generiert werden, die ansonsten schwer oder nicht für andere Arten der erwähnten Werbeformen genutzt werden können.

Weiterhin denkbar ist es vermittels der Projektionsmittel individuelle Werbung umfassende Informationen 01 auszugeben. Diese kann beispielsweise durch eine Ortung von Mobil-, insbesondere Smartphones im nahen Umfeld des eigenen Fahrzeugs 03 erfolgen. Die einzelnen Werbetreibenden bekannten Daten des Besitzers eines Mobil-, insbesondere Smartphones können dafür herangezogen werden, um individuelle Werbung beispielsweise für den vorbeigehende Fußgänger zu schalten. Hierbei werden die so genannten Big Data Kenntnisse eingesetzt und individuell - etwa in Form von Werbung - der an diesem Ort befindlichen Person durch Projektion zur Verfügung gestellt. Hierbei gilt es selbstverständlich datenschutzrechtliche Themen zu beachten.

In der Definition von Big Data bezieht sich das Big auf die drei Dimensionen Volume (Umfang, Datenvolumen), Velocity (Geschwindigkeit, mit der die Datenmengen generiert und transferiert werden) sowie Variety (Bandbreite der Datentypen und - quellen). Erweitert wird diese Definition um die zwei V's Value und Validity, welche für einen unternehmerischen Mehrwert und die Sicherstellung der Datenqualität stehen. Der Begriff Big Data unterliegt als Schlagwort einem kontinuierlichen Wandel. So wird mit ihm ergänzend auch oft der Komplex der Technologien beschrieben, die zum Sammeln und Auswerten dieser Datenmengen verwendet werden. Die gesammelten Daten können dabei aus verschiedensten Quellen stammen.

Auch kann das eigene Fahrzeug 03 für die umliegenden Personen Hilfsdaten umfassende Informationen durch Projektion generieren. So können beispielsweise etwa bei einer hierfür spezialisierten Einrichtung, beispielsweise einem Internetportal registrierten Personen Navigationspfeile angezeigt werden, wenn diese beispielsweise mit ihrem Smartphone momentan nach einem Restaurant oder einem Kino in der Nähe suchen. Dadurch wird deren Smartphonebildschirm durch die Projektion der Informationen anhand der in einer oder mehreren Fahrzeugleuchten des eigenen Fahrzeugs 03 beherbergten Projektionsmittel erweitert und/oder vergrößert.

Auch können die Projektionsmittel für die Darstellung von Piktogrammen, Bildern, Warnhinweisen, etc. auf der Straße, umliegenden Wänden oder in der Fahrzeugleuchte 02 eingesetzt werden.

Eine zusätzliche, durch die Erfindung geschaffene Möglichkeit besteht darin, das Warndreieck, welches bei einem Unfall zur Absicherung des Verkehrsraums hinter dem eigenen Fahrzeug 03 aufgestellt werden muss durch Ausgabe einer Information 01 vermittels Projektion eines Bilds 05 zu unterstützen. Beispielsweise kann auf eine Fläche 04 auf der Straße ein symbolischer Warnhinweis projiziert werden. Damit kann die Verkehrssicherheit weiter gesteigert werden.

Diese genannten Möglichkeiten der Erfindung bestehen aktuell - aufgrund der bestehenden gesetzlichen Regelungen - für abgestellte, nämlich stehende, insbesondere parkende und dadurch nicht am fließenden Verkehr teilnehmende eigene Fahrzeuge 03. Bei am fließenden Verkehr teilnehmenden Fahrzeugen auf öffentlichen Verkehrswegen gilt es die hier geltenden gesetzlichen Regelungen einzuhalten.

Innerhalb des gesetzlich Zulässigen ist jedoch denkbar, bei einem am fließenden Verkehr teilnehmenden eigenen Fahrzeug 03 die Projektionsmittel während der Fahrt für andere Möglichkeiten einzusetzen.

Beispielsweise könnte in Abhängigkeit von dem Abstand eines hinterherfahrenden anderen Fahrzeugsein grüner, gelber oder roter Balken auf die Straße projiziert werden, der den Abstand zum eigenen Fahrzeug 03 visualisiert. Auch damit kann die Verkehrssicherheit weiter gesteigert werden.

Auch könnte bei zu nahem Auffahren des hinterherfahrenden anderen Fahrzeugs der aktuelle Bußgeldkatalog herangezogen werden und die mögliche Strafe für zu dichtes Auffahren auf die Straße projiziert werden. Dies könnte eine Motivation sein, regelkonform zu fahren und damit die Sicherheit der Straßen zu erhöhen. Da dies aber zu Verwirrungen und/oder zu gegenteiligem Verhalten führen könnte, ist dies nur ein Gedankenspiel zur Anregung weiterer Ideen anzusehen.

Bei zu dichtem Auffahrverhalten des eigenen Fahrzeugs 03 könnte diese Information auch an die Fahrzeugversicherung gemeldet werden und somit die Versicherungsprämie sich entsprechend ändern. Auch dies könnte zu einer Motivation für regelkonformes Fahren führen und damit die Sicherheit der Straßen weiter erhöhen. Da dies ebenfalls zu Verwirrungen und/oder zu gegenteiligem Verhalten führen könnte, ist dies nur ein Gedankenspiel zur Anregung weiterer Ideen anzusehen

Bei der Darstellung von Werbung oder anderen bildlichen Darstellungen müssen im öffentlichen Raum, insbesondere im Verkehrsraum, aber auch anderen Orten, die gesetzlichen und behördlichen Regelungen - in Abhängigkeit von dem jeweiligen Ort - beachtet werden.

Ist der Standort des eigenen Fahrzeugs 03 beispielsweise durch Satellitennavigationsempfangseinrichtungen bekannt, können auch vorab Genehmigungen von den Behörden für die Darstellung von Werbung an dem Ort eingeholt werden. Damit wäre dies stets legal. Auch kann dies in Echtzeit an Ort und Stelle durchgeführt werden, in dem die Lageinformation vom Fahrzeug zur Werbefirma gesendet wird, diese wiederum die Genehmigung für die Werbung bei der Behörde einholt und nach erfolgter Freigabe dem Fahrzeug die geeignete Werbung übersendet zur Projektion. Dies setzt eine weitere Vernetzung unterschiedlicher Einrichtungen voraus. Dieser Trend ist durch die stetig voranschreitende Car-to-X- (Car2X-) Kommunikationstechnologie nicht nur ein visionärer Gedanke, sondern Realität für die nächsten Jahre. Car-to-X ist die Erweiterung der Car-to-Car- (Car2Car- oder C2C-) Kommunikation.

Car-to-X Kommunikation beschreibt dabei einen funkbasierten Austausch von Informationen zwischen Fahrzeugen, aber auch zwischen Fahrzeugen und Verkehrsinfrastruktur, wie etwa Ampelanlagen, Verkehrsüberwachungseinrichtungen, etc..

Hierdurch können gefährliche Situationen dem Fahrer eines Fahrzeugs frühzeitig mitgeteilt werden. Beispielsweise kann so vor Geisterfahrern gewarnt werden, aber auch vor Stauenden, auf die sich der Fahrer mit seinem Fahrzeug zu bewegt, und/oder vor Einsatzfahrzeugen, die sich von hinten nähern oder auch seitlich zum Beispiel in einer Kreuzung nähern. Jedes Fahrzeug mit Car-to-X Technologie kann gleichzeitig und eigenständig Warnmeldungen empfangen und versenden. Car-to-X-Kommunikation bildet somit ein Netzwerk für Verkehrswarnungen und Verkehrsinformationen aus allen entsprechend ausgerüsteten Fahrzeugen.

Car2Car bezeichnet demgegenüber den Austausch von Informationen und Daten zwischen zwei oder mehreren unmittelbar benachbarten Fahrzeugen mit dem Hintergrund, dem Fahrer frühzeitig kritische und gefährliche Situationen zu melden. Car2Car ist ein Spezialfall von Car2X

Vermittels Car-to-X-Kommunikation können Verkehrsinformationen am Standort des eigenen Fahrzeugs 03 berücksichtigt werden, die weit entfernt außerhalb des Sichtbereichs gewonnen worden sind.

Eine sich Car-to-X-Kommunikation bedienende, vorteilhafte Weiterbildung des erfindungsgemäßen Verfahrens kann demnach vorsehen, dass zusätzlich Verkehrsinformationen ausgewertet werden, die mit Erfassungsmitteln und/oder Informationsquellen mindestens eines anderen Fahrzeugs und/oder mindestens einer Einrichtung der Verkehrsinfrastruktur erfasst worden sind und durch Übermittlung von mindestens einem anderen Fahrzeug und/oder einer Einrichtung der Verkehrsinfrastruktur zum eigenen Fahrzeug 03 gelangt sind.

Eine ebenfalls auf Car-to-X-Kommunikation zurückgreifende, alternative oder zusätzliche Weiterbildung des erfindungsgemäßen Verfahrens kann vorsehen, dass zumindest ein Teil der erfassten Verkehrsinformationen und/oder wenigstens ein Teil der Erkenntnisse deren Auswertung mindestens einem anderen Fahrzeug und/oder einer Einrichtung der Verkehrsinfrastruktur übermittelt werden.

Sowohl das beschriebene Verfahren, als auch die beschriebene Fahrzeugleuchte 02, sowie wahlweise oder zusätzlich die Außenrückblickspiegelanordnung 07 können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der noch folgenden Beschreibung erwähnte Merkmale aufweisen.

Das Verfahren kann einzelne oder Kombinationen der zur beschriebenen Fahrzeugleuchte 02 und/oder Außenrückblickspiegelanordnung 07 erwähnte Merkmale aufweisen und/oder verwirklichen, ebenso wie die beschriebene Fahrzeugleuchte 02 und/oder Außenrückblickspiegelanordnung 07 einzelne oder Kombinationen der zum Verfahren erwähnten Merkmale aufweisen und/oder zu deren Verwirklichung erforderliche und/oder geeignete Mittel aufweisen können.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Information
- 02: Fahrzeugleuchte
- 03: Fahrzeug
- 04: Fläche
- 05: Bild
- 06: Darstellung
- 07: Außenrückblickspiegelanordnung

- 41: Wandfläche
- 42: Bodenfläche

- 61: Stopplinie
- 62: Laufschrift
- 63: Richtungsangabe
- 64: Entfernungsangabe
- 65: Wiedergabe
- 66: Warnanzeige

## Patentansprüche

1. Verfahren zur Erzeugung und Wiedergabe von Informationen (01) zumindest mittels in einer Fahrzeugleuchte (02) eines abgestellten, eigenen Fahrzeugs (03) beherbergter Projektionsmittel, umfassend die Verfahrensschritte:
- Erfassung von das Vorhandensein und den Verlauf von Fuß- und Verkehrswegen sowie Orte und Bewegungen anderer Fahrzeuge und Personen umfassender Verkehrsinformationen im Umkreis des eigenen Fahrzeugs (03) mittels fahrzeugeigener Erfassungsmittel und/oder fahrzeugeigener Informationsquellen,
- Auswertung der Verkehrsinformation unter Erkennung einer potentiellen Gefährdung einer Person in unmittelbarer Nähe des eigenen Fahrzeugs (03),
- Erzeugung einer auf die Gefährdung hinweisenden Darstellung (06, 61, 62, 63, 64, 65, 66), und
- Warnung wenigstens der potentiell gefährdeten Person durch Ausgabe einer zumindest die auf die Gefährdung hinweisende Darstellung (06, 61, 62, 63, 64, 65, 66) umfassenden Information (01) durch Projektion mindestens eines die Darstellung (06, 61, 62, 63, 64, 65, 66) wiedergebenden Bilds (05) mittels mindestens einem in wenigstens einer Fahrzeugleuchte (02) des eigenen Fahrzeugs (03) beherbergter Projektionsmittel auf eine Fläche (04, 41, 42) in der Nähe des eigenen Fahrzeugs (03).

2. Verfahren nach Anspruch 1, wobei es sich bei der Fläche (04) um eine Wand- oder Bodenfläche (41, 42) oder um eine Kombination aus Wand- und Bodenfläche (41, 42) handelt.

3. Verfahren nach Anspruch 1 oder 2, wobei die Darstellung an die Ausrichtung, Art und Orientierung der Fläche (04, 41, 42) angepasst wird.

4. Verfahren nach Anspruch 1, 2 oder 3, wobei die Darstellung (06) eine Stopplinie (61) umfasst, bei deren Übertretung der Parkraum des eigenen Fahrzeugs (03) verlassen und ein Verkehrsweg anderer Fahrzeuge beschritten wird.

5. Verfahren nach einem der Ansprüche 1 bis 4, wobei die Information (01) eine Projektion eines Warnhinweises (66) auf den Boden des Verkehrswegs vor einem herannahenden anderen Fahrzeug und/oder die Ausgabe eines Warnsignals (66) an das herannahende andere Fahrzeug umfasst.

6. Verfahren nach einem der voranstehenden Ansprüche, wobei die Darstellung (06) einen Hinweis (63) auf eine sichere Überquerungsmöglichkeit des Verkehrswegs anderer Fahrzeuge in der Nähe des eigenen Fahrzeugs (03) umfasst.

7. Verfahren nach einem der voranstehenden Ansprüche, wobei die Information (01) ein Tonsignal umfasst.

8. Verfahren nach einem der voranstehenden Ansprüche, wobei die Information (01) die Weiterleitung einer Mitteilung an eine Notrufzentrale umfasst.

9. Verfahren nach einem der voranstehenden Ansprüche, wobei die Information (01) zumindest in der Zeit oder einem Teil der Zeit, in der zwar Personen im Umkreis einschließlich der näheren Umgebung des eigenen Fahrzeugs (03) erfasst werden, diese jedoch keiner potentiellen Gefährdung ausgesetzt sind, Werbung umfasst.

10. Verfahren nach einem der voranstehenden Ansprüche, wobei die Ausführung des Verfahrens ausgesetzt wird, wenn ein für die Stromversorgung von zur Durchführung des Verfahrens im eigenen Fahrzeug (03) verbaute Mittel vorgesehener elektrischer Energiespeicher einen vorgegebenen Schwellenwert für dessen Restladung unterschreitet.

11. Verfahren nach einem der voranstehenden Ansprüche, wobei zusätzlich Verkehrsinformationen ausgewertet werden, die mit Erfassungsmitteln und/oder Informationsquellen mindestens eines anderen Fahrzeugs und/oder mindestens einer Einrichtung der Verkehrsinfrastruktur erfasst worden und durch Übermittlung von mindestens einem anderen Fahrzeug und/oder einer Einrichtung der Verkehrsinfrastruktur zum eigenen Fahrzeug (03) gelangt sind.

12. Verfahren nach einem der voranstehenden Ansprüche, wobei zumindest ein Teil der erfassten Verkehrsinformationen und/oder wenigstens ein Teil der Erkenntnisse deren Auswertung mindestens einem anderen Fahrzeug und/oder einer Einrichtung der Verkehrsinfrastruktur übermittelt werden.

## Geänderte Patentansprüche

### Geänderte Patentansprüche gemäss Regel 137(2) EPÜ.

1. Verfahren zur Erzeugung und Wiedergabe von Informationen (01) zumindest mittels in einer Fahrzeugleuchte (02) eines abgestellten, eigenen Fahrzeugs (03) beherbergter Projektionsmittel, umfassend die Verfahrensschritte:
- Erfassung von das Vorhandensein und den Verlauf von Fuß- und Verkehrswegen sowie Orte und Bewegungen anderer Fahrzeuge und von Personen umfassender Verkehrsinformationen im Umkreis des eigenen Fahrzeugs (03) mittels fahrzeugeigener Erfassungsmittel und/oder fahrzeugeigener Informationsquellen,
- Auswertung der Verkehrsinformation unter Erkennung einer potentiellen Gefährdung einer Person in unmittelbarer Nähe des eigenen Fahrzeugs (03) durch einen möglichen Verkehrsunfall in der Umgebung des eigenen Fahrzeugs (03) anhand Berechnung eines Kollisionsorts der Person mit einem herannahenden, anderen Fahrzeug, wobei bei errechenbarem Kollisionsort zwischen der Person und dem jeweiligen anderen Fahrzeug eine akute Gefährdungslage vorliegt, und wobei keine Gefährdung zwischen der Person und dem jeweiligen anderen Fahrzeug vorliegt, wenn sich unter gegenwärtiger Bewegungsrichtung und -geschwindigkeit der Person und des herannahenden, anderen Fahrzeugs kein Kollisionsort ermitteln lässt,
- Erzeugung einer auf die Gefährdung hinweisenden Darstellung (06, 61, 62, 63, 64, 65, 66), und
- Warnung wenigstens der durch einen möglichen Verkehrsunfall in der Umgebung des eigenen Fahrzeugs (03) potentiell gefährdeten Person durch Ausgabe einer zumindest die auf die Gefährdung hinweisende Darstellung (06, 61, 62, 63, 64, 65, 66) umfassenden Information (01) durch Projektion mindestens eines die Darstellung (06, 61, 62, 63, 64, 65, 66) wiedergebenden Bilds (05) mittels mindestens einem in wenigstens einer Fahrzeugleuchte (02) des eigenen Fahrzeugs (03) beherbergter Projektionsmittel auf eine Fläche (04, 41, 42) in der Nähe des eigenen Fahrzeugs (03).

2. Verfahren nach Anspruch 1, wobei es sich bei der Fläche (04) um eine Wand- oder Bodenfläche (41, 42) oder um eine Kombination aus Wand- und Bodenfläche (41, 42) handelt.

3. Verfahren nach Anspruch 1 oder 2, wobei die Darstellung an die Ausrichtung, Art und Orientierung der Fläche (04, 41, 42) angepasst wird.

4. Verfahren nach Anspruch 1, 2 oder 3, wobei die Darstellung (06) eine Stopplinie (61) umfasst, bei deren Übertretung der Parkraum des eigenen Fahrzeugs (03) verlassen und ein Verkehrsweg anderer Fahrzeuge beschritten wird.

5. Verfahren nach einem der Ansprüche 1 bis 4, wobei die Information (01) eine Projektion eines Warnhinweises (66) auf den Boden des Verkehrswegs vor einem herannahenden anderen Fahrzeug und/oder die Ausgabe eines Warnsignals (66) an das herannahende andere Fahrzeug umfasst.

6. Verfahren nach einem der voranstehenden Ansprüche, wobei die Darstellung (06) einen Hinweis (63) auf eine sichere Überquerungsmöglichkeit des Verkehrswegs anderer Fahrzeuge in der Nähe des eigenen Fahrzeugs (03) umfasst.

7. Verfahren nach einem der voranstehenden Ansprüche, wobei die Information (01) ein Tonsignal umfasst.

8. Verfahren nach einem der voranstehenden Ansprüche, wobei die Information (01) die Weiterleitung einer Mitteilung an eine Notrufzentrale umfasst.

9. Verfahren nach einem der voranstehenden Ansprüche, wobei die Information (01) zumindest in der Zeit oder einem Teil der Zeit, in der zwar Personen im Umkreis einschließlich der näheren Umgebung des eigenen Fahrzeugs (03) erfasst werden, diese jedoch keiner potentiellen Gefährdung ausgesetzt sind, Werbung umfasst.

10. Verfahren nach einem der voranstehenden Ansprüche, wobei die Ausführung des Verfahrens ausgesetzt wird, wenn ein für die Stromversorgung von zur Durchführung des Verfahrens im eigenen Fahrzeug (03) verbaute Mittel vorgesehener elektrischer Energiespeicher einen vorgegebenen Schwellenwert für dessen Restladung unterschreitet.

11. Verfahren nach einem der voranstehenden Ansprüche, wobei zusätzlich Verkehrsinformationen ausgewertet werden, die mit Erfassungsmitteln und/oder Informationsquellen mindestens eines anderen Fahrzeugs und/oder mindestens einer Einrichtung der Verkehrsinfrastruktur erfasst worden und durch Übermittlung von mindestens einem anderen Fahrzeug und/oder einer Einrichtung der Verkehrsinfrastruktur zum eigenen Fahrzeug (03) gelangt sind.

12. Verfahren nach einem der voranstehenden Ansprüche, wobei zumindest ein Teil der erfassten Verkehrsinformationen und/oder wenigstens ein Teil der Erkenntnisse deren Auswertung mindestens einem anderen Fahrzeug und/oder einer Einrichtung der Verkehrsinfrastruktur übermittelt werden.
